# EUROPEAN PATENT APPLICATION

(11) **EP 4 644 051 A1**
(43) Date of publication of application: **05.11.2025**
(21) Application number: 24173025.8
(22) Date of filing: 29.04.2024
(51) Int. Cl.: B25J 9/00

(54) **ANKLE EXOSKELETON**

(71) Applicant: Karlsruher Institut für Technologie, 76131 Karlsruhe (DE)
(72) Inventor: Dezman, Miha, 76133 Karlsruhe (DE); Marquardt, Charlotte, 76227 Karlsruhe (DE); Asfour, Tamim, 76139 Karlsruhe (DE)

(57) **Abstract**

Exoskeleton, comprising: a assembly having a fixture (1) fixing a foot thereto, having two points arranged on each side of the fixture, and a frame (2) positioning the points relative to each other, that is connected to the fixture, and having an area; an arrangement (3) is inserted at each of the points; two struts, each of which is mounted with one of the ends of the arrangements over two axes and each of which has another arrangement at the other end and another area at the respective strut; another frame positioning the other arrangements relative to one another and is mounted relative to the struts; another assembly with another fixture fixing a lower leg, wherein the other frame is fixed between the other arrangements with the other frame; wherein both other areas are each connected to the area via a tension element; and an actuator adjusting the tension elements.

## Description

The technical field of this application addresses an ankle exoskeleton. Exoskeleton devices are wearable robots that assist during a user's motion when worn. In the realm of wearable robotics, exoskeleton devices play a pivotal role in augmenting user mobility and reducing metabolic expenditure during motion.

Notably, ankle exoskeletons have demonstrated significant metabolic reductions, with optimal assistive torque ranging between 0.61 Nm/kg to 0.85 Nm/kg, corresponding to 49 Nm to 68 Nm for an 80 kg user, resulting in a reduction of metabolic consumption by up to 31.6% [2]. However, prevailing ankle exoskeleton designs primarily focus on providing assistance along a single axis of rotation, typically limited to the sagittal plane, and are primarily evaluated on tasks emphasizing straight-line walking.

This limitation disregards the comprehensive range of ankle movements, comprising all three degrees of freedom (=DoF): plantarflexion/dorsiflexion, inversion/eversion, and internal/external rotation. Activities such as navigating rough terrain or pivoting in place demand engagement across these rotational axes, each requiring varying degrees of motion [1]. Consequently, the persistent challenge lies in crafting ankle exoskeletons that deliver flexibility across all three DoF while upholding a lightweight profile comparable to single-axis devices ([1], [2]). Ankle exoskeletons must incorporate sufficient movable joints to harmonize with a user's kinematic structure, thereby ensuring compatibility with the intricate dynamics of human motion. However, attaining this harmony necessitates intricate mechanical designs, often leading to heightened weight and bulkiness. Many existing designs compromise on kinematic compatibility to mitigate weight, thereby sacrificing the optimal number of DoF crucial for natural walking.

Moreover, desirable features such as precise angle and torque measurement, as well as mechanical adjustability, further enhance the functionality and usability of ankle exoskeletons. Further advantages include the ability to use the same device on either the left or right leg without the need for mirroring of its components, to reduce the variability of components.

Conventional comparable devices, such as the one presented in [3], feature actuators positioned anterior on the shin, pulling on struts connected to a hiking boot. While permitting limited inversion/eversion and internal/external rotation, these devices lack accurate measurement capabilities for all three ankle rotations and joint torque, and mechanical adjustability.

In summary, the state of the art in ankle exoskeleton technology underscores the need to overcome the trade-off between device complexity, mechanical strength, and weight while accommodating the full range of ankle motion and incorporating essential measurement and adjustability features as well as high assistance torques. This represents a crucial step forward in advancing the efficacy and versatility of ankle exoskeletons for diverse user populations and applications.

It is an object of the invention disclosed herein to provide an individually customizable ankle exoskeleton with at least three DoF, which also offers a simplified structure and the capability of weight reduction.

Said object is achieved by the method according to the subject matter of the independent claims. Dependent claims relating to these represent advantageous embodiments. Advantageous further developments, which can be implemented individually or in any desired combination, are shown in the dependent claims.

In the following, the terms "comprise", "include", "enclose", "involve" or any grammatical variations thereof are used in a non-exclusive manner. Accordingly, these terms may refer to situations in which, in addition to the features introduced by these terms, no further features are present, or to situations in which one or more further features are present. For example, the expression "A has B", "A comprises B", or "A includes B" may refer to the situation where, apart from B, there is no further element present in A (i.e., in which A consists exclusively of B), as well as to the situation in which, in addition to B, one or more further elements are present in A, for example element C, elements C and D or even further elements.

Further, it is noted that the terms "at least one" and "one or more" as well as grammatical variations of these terms, when used in conjunction with one or more elements or features, are intended to express and express the element or feature in a single or multiple manner can only be used once, for example, during the initial introduction of the feature or element. In the case of a subsequent renewed mention of the feature or element, the corresponding term "at least one" or "one or more" is generally no longer used without restricting the possibility that the feature or element may be provided in a single or multiple manner.

Furthermore, in the following, the terms "preferably", "in particular", "for example", "for instance", "by the way of example", or similar terms are used in conjunction with optional features, without thereby restricting alternative embodiments. Thus, features introduced by these terms are optional features, and it is not intended to limit the scope of the claims and particularly the independent claims by these features. Thus, as will be recognized by those skilled in the art, the claimed solution can also be carried out using other embodiments. Similarly, features introduced by "in one embodiment", or "in another embodiment" are understood to be optional features, without thereby limiting alternative embodiments or the scope of the independent claims. Furthermore, by means of these introductory expressions, all possibilities to combine the introduced features with other features, whether optional or non-optional features, should be remained intact.

In other words, it is an object of the herein disclosed invention to provide an ankle exoskeleton that addresses the aforementioned limitations in existing devices. The current landscape of lower limb assistive technology presents challenges in achieving a harmonious balance between assistance torque, mechanical device complexity, and added weight, particularly when providing simultaneously three DoF.

Conventional solutions often fail to achieve this balance, leading to compromised user experiences and limited adaptability. Furthermore, the lack of kinematic compatibility inhibits natural motion patterns, while control complexities, such as inadequate measured actuation forces and inadequate joint angle measurement, further impede usability.

To overcome these challenges, the design of such exoskeletons needs prioritizes efficiency, simplicity, and adaptability. By leveraging innovative design principles, including comprehensive joint angle and actuation force measurement, exoskeletons can simplify control mechanisms and enhance user mobility. This is achievable by reducing the weight of the device, allowing lighter design components by minimizing twisting motions due to evenly distributed actuation forces due to a symmetric design.

Moreover, exoskeleton design has to address the problem of adaptability across diverse user profiles, i.e., with respect to various anatomies. This includes accommodating variations in limb dimensions within individual users and facilitating easy adjustment between left and right legs on the same device, in case of different dimensions of the legs.

A first embodiment discloses an ankle exoskeleton, comprising: a first frame assembly having a first mounting fixture set up in such a way to fix a foot thereto, having two bearing points arranged on each side of the first mounting fixture, and a first connecting frame positioning rigidly the two bearing points relative to each other, is rigidly connected to the first mounting fixture, and having at least a first force transmission area centrally in front and/or behind the first mounting fixture; a first bearing arrangement is inserted at each of the bearing points; two strut arrangements, each of which is pivotably mounted with one of the ends of the first bearing arrangements at least over two axes and each of which has a second bearing arrangement at the other end and at least a second force transmission area at the respective strut arrangement; a second connecting frame positioning the two second bearing arrangements rigidly relative to one another and is pivotably mounted relative to the strut arrangements; a second frame assembly with a second mounting fixture set up such a way to fix a lower leg to the foot, wherein the second connecting frame is vertically pivotably fixed centrally between the two second bearing arrangements via either a system flexibility axially to both strut arrangements or a third bearing arrangement with the second connecting frame; wherein both second force transmission areas are each connected to the first force transmission area via at least one tension element; and an actuator system configured in such a way that the length of the tension elements is adjustable statically and/or dynamically. The parallel, symmetric structure provides at least three DoF in the ankle exoskeleton, allows for use on both legs and evenly distributes the forces to both sides of each leg, increasing frame strength to allow high torques while still maintaining a low weight.

A further embodiment discloses an ankle exoskeleton according to the preceding embodiment, wherein the first bearing arrangement and/or the second bearing arrangement is/are set up in such a way to provide at least two axes of rotation. This feature contributes to the kinematic compatibility and the three DoF.

A further embodiment discloses an ankle exoskeleton according to one of the preceding embodiments, wherein the first bearing arrangement and/or the second bearing arrangement comprise/s a single bearing, a bearing combination, a single elastic element or a combination of elastic elements. This feature contributes to the kinematic compatibility and the three DoF.

A further embodiment discloses an ankle exoskeleton according to one of the preceding embodiments, wherein the first bearing arrangement, the second bearing arrangement, and/or the third bearing arrangement comprise/s at least a rotary encoder to measure rotation. This feature allows measurement(s) of ankle joint angles and provides direct feedback to reduce the complexity of the controller.

A further embodiment discloses an ankle exoskeleton according to one of the preceding embodiments, wherein the second mounting fixture is elastic, and the bearing arrangement is integrated into the second mounting fixture. This feature provides a solution to reduce the number of components of the device.

A further embodiment discloses an ankle exoskeleton according to one of the preceding embodiments, wherein the third bearing arrangement is set up in such a way to provide at least one axis of rotation. This feature contributes to the kinematic compatibility and the three DoF.

A further embodiment discloses an ankle exoskeleton according to one of the preceding embodiments, wherein the third bearing arrangement comprises a single bearing or elastic element. This feature contributes to the kinematic compatibility and the three DoF.

A further embodiment discloses an ankle exoskeleton according to one of the preceding embodiments, wherein the first force transmission area and/or at least one of the second force transmission areas comprise/s one or more pulleys. This feature provides adaptability to different amounts of required assistance torques.

A further embodiment discloses an ankle exoskeleton according to one of the preceding embodiments, wherein the first force transmission area provides more than one first force transmission sub-areas. This feature contributes to the symmetric distribution of forces and to lower weight of the device.

A further embodiment discloses an ankle exoskeleton according to one of the preceding embodiments, wherein one of the second force transmission areas comprises a fixture to at least one tension element. This feature contributes to the symmetric distribution of forces and the actuation of the device.

A further embodiment discloses an ankle exoskeleton according to one of the preceding embodiments, wherein the second force transmission areas are configured in such a way that they are adjustable in height along the strut arrangement. This feature provides adaptability between and within users.

A further embodiment discloses an ankle exoskeleton according to one of the preceding embodiments, wherein the tension element is formed by a cable or a rope that is formed by at least one material of a group of materials, wherein this group comprises: metals (e.g., steel, brass), synthetic materials (e.g., Dyneema, nylon, Kevlar) or natural rope materials (e.g., hemp, burlap). This feature contributes to the force transmission from the actuation system to the joint.

A further embodiment discloses an ankle exoskeleton according to one of the preceding embodiments, wherein the actuator system comprises an actuator connected to at least one tension element providing torque around one axis of the first bearing arrangement for plantar- and/or dorsiflexion and the at least one tension element is formed by a block and tackle arrangement with one or more tensioning sections. This feature provides adaptability to different amounts of required assistance torques.

A further embodiment discloses an ankle exoskeleton according to one of the preceding embodiments, wherein the first connecting frame and/or the second connecting frame is/are configured in such a way that it is/they are adjustable in width and length along the longitudinal and transversal axes of a lower leg. This feature provides adaptability between and within users.

A further embodiment discloses an ankle exoskeleton according to one of the preceding embodiments, wherein the first connecting frame provides strain gauge sensors to measure load. This feature measures the ankle joint torque and therefore, provides direct feedback to reduce the complexity of the controller.

A further embodiment discloses an ankle exoskeleton according to one of the preceding embodiments, wherein the strut arrangements are configured in such a way that they are adjustable in length along their longitudinal axis. This feature provides adaptability between and within users.

A further embodiment discloses an ankle exoskeleton according to one of the preceding embodiments, wherein the second mounting fixture is configured in such a way that it is adjustable in width and height along the longitudinal and transversal axes of a lower leg and relative to the third bearing arrangement. This feature provides adaptability between and within users.

Definitions and specifications of herein used genera:
- The term "frame assembly" is defined herein by a foundational structure of the device, composed of/by one or more parts that are rigidly interconnected to form a cohesive unit. It serves as the primary framework upon which the device is built and to which other components are attached.
- The term "mounting fixture" is defined herein by a component that acts as an intermediary extension, enabling the secure attachment of additional modules and extensions to the device. It facilitates the expansion and customization of the device's capabilities.
- The term "bearing point" is defined herein by a specific location within the device that serves as the axis for rotation, i.e., houses one or more bearing arrangements.
- The term "connecting frame" is defined herein by a crucial connection element that unifies the device by linking disparate sections, such as the left and right sides. It ensures the structural integrity and cohesiveness of the frame, making it a singular, functional unit.
- The term "force transmission area" is defined herein by a specific part of the frame where forces are applied and transmitted, like the attachment of a rope. It is a critical point designed to handle the stress and transfer of forces throughout the structure.
- The term "force transmission sub-areas" is defined herein to specify distinct sections within the overall force transmission area of a device or system. Each sub-area is designed to handle a portion of the total force being applied, distributing the load more evenly or according to specific design requirements.
- The term "bearing arrangement" is defined herein by a configuration that includes one or more bearing elements designed to support and locate a shaft, both radially and axially, relative to other components such as housings. It ensures precise positioning of the shaft and facilitates its intended movements within the device.
- The term "strut arrangement" is defined herein by an assembly composed of multiple elements, each functioning as a strut, arm, or rod. These components collectively provide support, stability, and possibly movement to the structure they are part of, often resisting longitudinal compression or tension.
- The term "system flexibility" is defined herein by the inherent adaptability of a system's components to accommodate changes of movement. It encompasses the presence of elastic elements that can bend or stretch, as opposed to rigid bearings that solely permit rotation. In biological contexts, such as with human tissue, system flexibility may also include the natural deformation of tissues that compensates for movements, ensuring the system's overall functionality and resilience.
- The term "tension element" is defined herein by components like ropes or cables that are designed to withstand and transmit tension loads. They are capable of bearing pulling forces but not compression, as they lack the rigidity to resist buckling under such conditions. Tension elements are crucial in systems where force needs to be distributed over a distance or across various points without compromising the structure's integrity.
- The term "actuator system" is defined herein by a unit comprised of one or more actuators, which may include electric motors or other means of actuation such as pneumatics. It is designed to input power into a device, enabling the activation and control of tension elements within the system. The actuator system is essential for converting energy into mechanical motion, thereby facilitating the operation of the device.
- The term "axes of rotation" is defined herein by imaginary lines that pass through fixed points of a rotating body, around which all other points of the body move in circular paths.
- The term "single bearing" is defined herein by a mechanical component that typically consists of a set of steel balls or cylinders held within a ring, known as a race. It is designed to reduce rotational friction and support both radial and axial loads, allowing for smooth rotation of parts in machinery.
- The term "bearing combination" is defined herein by a system that incorporates more than one bearing, such as ball bearings and sliding bearings, to achieve a specific performance objective.
- The term "single elastic element" is defined herein by a component that transmits rotary motion while allowing for deformation. Unlike rigid elements, it is configured to flex or bend, accommodating movements and forces that would otherwise require a joint or bearing.
- The term "combination of elastic elements" is defined herein by an assembly that integrates more than one elastic element, such as bearings or other flexible structures, to achieve a desired level of elasticity and mechanical performance.
- The term "rotary encoder" is defined herein by an electromechanical device that converts the angular position or motion of a shaft or axle into analog or digital output signals. There are two main types: absolute and incremental.
- The term "pulley" is defined herein by a wheel on an axle or shaft enabling a tension element passing over the wheel to move and change direction or transfer force between itself and a shaft.
- The term "block and tackle arrangement" is defined herein by a system of two or more pulleys with a tension element threaded between them in multiple tensioning sections to achieve a system for a desired level of tension loads. The pulleys are assembled into blocks, and these blocks are paired so that one is fixed and one moves with the load. This system provides mechanical advantage, which amplifies the force applied to the tension element, allowing for the force to be split in half or multiplied, making it easier to lift or move the load.
- The term "tensioning sections" is defined herein by an assembly that integrates more than one tension element or more than one layer of one tension element to achieve a desired level of tension loads and is typically part of a block and tackle system. In the context of multiple tension elements or multiple layers of tension elements, it denotes to the number of tension elements or the number of layers of tension elements between two subsequent pulleys. It's an essential component for managing the mechanical advantage provided by the block and tackle arrangement.
- The term "strain gauges" is defined herein by an electromechanical device that converts deformation of an object due to applied stress into analog output signals. As the material is stressed and deforms, the electrical resistance of the strain gauge changes proportionally. This change in resistance is measured and used to determine the amount of strain experienced by the material.
- The term "fixture" is defined herein by a designated attachment point where a tension element is securely fastened and held in place during use.
- The term "pivotably mounted" is defined herein by an object that is mounted in such a way that it pivots around a fixed point or axis. It allows the object to rotate or swivel, usually within a specified range of motion.
- The term "vertically pivotably fixed centrally" is defines herein that an object is mounted in such a way that it pivots or rotate around a central axis that is oriented vertically.
- The term "statically adjustable" is defined herein by an object or system whose length or position is manually altered without the need for power tools or automation. It typically involves manual manipulation or adjustment by a user to achieve a predetermined configuration.
- The term "dynamically adjustable" is defined herein by an object or system that is adjustable or altered through powered mechanisms, such as actuators. These adjustments are made automatically or remotely, often in response to changing conditions or requirements.
- The term "plantarflexion" is defined herein by a downward flexion of the foot, decreasing the angle between the back of the leg and the sole of the foot.
- The term "dorsiflexion" is defined herein by an upward flexion of the foot, decreasing the angle between the leg and the dorsum (top) of the foot.
- The term "inversion" is defined herein by an upward motion of the medial edge of the foot with simultaneous lowering of the lateral edge of the foot, turning the sole of the foot medially and thus increasing the angle between the lateral edge of the foot and the longitudinal axis of the lower leg.
- The term "eversion" is defined herein by a downward motion of the medial edge of the foot with simultaneous lifting of the lateral edge of the foot, turning the sole of the foot laterally and thus decreasing the angle between the lateral edge of the foot and the longitudinal axis of the lower leg.
- The term "internal rotation" is defined herein by a rotation of the foot around the longitudinal axis of the lower leg towards the center of the body (medial rotation).
- The term "external rotation" is defined herein by a rotation of the foot around the longitudinal axis of the lower leg away from the center of the body (lateral rotation).
- The term "longitudinal axis" is defined herein by an imaginary line that runs along the long direction of a component or any component part and is relating to length or the lengthwise dimension. In anatomy of the ankle joint it's often considered in alignment with the tibia, running from the top to the bottom of the lower leg and is crucial for understanding movements like inversion and eversion and internal and external rotation of the foot.
- The term "transversal axis" is defined herein by an imaginary line that runs from side to side of a component or any component part and it is perpendicular to the longitudinal axis. In anatomy of the ankle joint it's essential for analyzing movements such as plantarflexion and dorsiflexion.

The disclosed invention relates to exoskeletons or wearable robots for assistance of the ankle joint, particularly to the mechanical design of such exoskeletons or wearable robots. The technical challenge lies in the design of a device with kinematics and dimensions compatible with the human motion. Additionally, the device needs to remain lightweight to minimize the added weight to its users and should be strong enough to transmit the torques from the exoskeleton to users' limbs.

Herein a design of a kinematically compatible ankle exoskeletons is disclosed that allows motion in three DoF of the ankle using a symmetric parallel frame design principle. This document discusses approaches to exoskeleton design, including the frame and mechanism, the adaptability of the components, the sensor setup and actuation system to achieve the aforementioned characteristics.

The core of the disclosed invention is the distribution of rotation DoF in the mechanism such that the frame is able to follow all three rotations (3 DoF) of the ankle motion. The DoF of the frame should not be confused with the rotations of the ankle. The ankle joint allows in principle three rotations, i.e., plantar-/dorsiflexion (1st DoF), ev-/inversion (2nd DoF) and in-/external rotation (3rd DoF). The exoskeleton frame in question requires a sufficient number of rotary DoF in the form of bearings and pins to support the three rotations of the ankle. The location and distribution of these mechanical rotary DoF or the frames kinematic is the main contribution of this herein disclosed invention.

The first frame assembly is attached to the foot, while the second frame assembly is attached to the shank. The attachment at the foot is configured to be realized at any point of the foot, e.g., ball or heel. An additional DoF may be added to the first mounting fixture to realize the rolling of the foot if the position of the fixture is chosen at the ball of the foot.

The distribution of rotation DoF in the proposed mechanism is such that the second frame assembly is able to execute motion in relation to the first frame assembly and thereby accommodates all three rotations of the ankle motion. Rotation in the first bearing arrangement corresponds to plantarflexion and dorsiflexion of the ankle joint. Rotation in the first bearing arrangement in combination with the second bearing arrangement and the third bearing arrangement allows for inversion and eversion, as well as internal and external rotation of the ankle joint.

The first bearing arrangement the second bearing arrangement and third bearing arrangement may include one or more DoF each to dynamically adjust to the aforementioned rotations of the ankle joint. This can be realized by one single ball joint each or a chain of revolute joints, as well as elastic elements with the same characteristics. While the first and last option reduce the number of required components, the second option allows for less complex, direct position (angle) measurement.

The first connecting frame and the second frame assembly may be realized such that the connection of the exoskeleton to the user is at the front or the back of the leg. Depending on the application or user this might result in more comfortable transfer of loads or reduce collisions with the environment.

The components of this mechanism are build using materials that feature high strength/weight ratio, like aluminum alloys, titanium alloys, carbon fiber composites, magnesium alloys, high-strength steel alloys, high entropy alloys, super steel alloys, etc. Furthermore, the symmetric strut structure allows for a strong and rigid support, this is reflected in a large torque/weight ratio of the device. Additionally, the loads are distributed symmetrically, meaning that the twisting forces are smaller. The parallel frame system is strong and rigid enough to support large loads - i.e., transfer of large torque on user joint and transfers its own weight or the weight of additional exoskeletons to the ground.

The complete mechanism of the disclosed invention may be designed and adapted to be symmetric with regard to the frontal plane of the lower leg, which is reflected in the reference numbers of the individual components (e.g., strut arrangement). Therefore, the same device may be used for the left leg and for the right leg of a user.

However, multiple components of the device are statically and dynamically adjustable in width, length and height to be fitted to different leg dimension, whether between the leg of one user or multiple users:
Between the first mounting fixture and the first connecting frame, two or more statically adjustable DoF may be included to be adjusted along the frontal axis of the foot to compensate for different foot and shoe length and to be adjusted along the longitudinal axis of the lower leg to adapt to different heights of the ankle joint.

The first connecting frame may include one or more statically adjustable DoF to be adjusted along the transversal axis of the foot to fit multiple foot and shoe width.

The second connecting frame may include one or more statically adjustable DoF to be adjusted along the transversal axis of the lower leg to compensate for different circumferences of the lower leg.

The strut arrangement and may include one or more statically adjustable DoF to be adjusted along the longitudinal axis of the lower leg to adapt to different length of the lower leg.

The second mounting fixture may include two or more statically adjustable DoF to be adjusted along the transversal axis of the lower leg to compensate for different circumferences of the lower leg and to be adjusted along the longitudinal axis of the lower leg to adapt to different length of the lower leg.

The 3 DoF nature of the device resulting from the first bearing arrangement, the second bearing arrangement and the third bearing arrangement and the dynamically adjustable components of the tension element of the device result in self-alignment when the device is donned.

The first bearing arrangement and third bearing arrangement may include rotary encoders to provide a measurement of three rotations of the frame and estimation of the three angles of the ankle joint. The three DoF of the frame are derived from a mathematical model of the complete mechanism using aforementioned three measurements. The average of both encoders in the first bearing arrangement allows measurement of absolute angle in the frontal plane and thereby the plantar/dorsiflexion angle. The in-/eversion angle is determined by measuring the absolute encoder in the third bearing arrangement. The in-/external rotation angle is calculated by the difference of the absolute encoders in the first bearing arrangement. A reliable way to determine the rotations of the ankle provides information on the user's motion to personalize control or to evaluate the motion (e.g., motor performance analysis).

The first connecting frame integrates strain gauges to measure the deformation of the frame due to the applied load which correlates to the joint torque induced around the axis of rotation of the first bearing arrangement. The measured joint torque is derived by model-based or experimental methods.

The second force transmission areas include one or more statically adjustable DoF to be adjusted along the longitudinal axis of the strut arrangement respectively to compensate for different length of the lower leg or to achieve comparable actuation conditions with regard to the lever of the tension element.

The first force transmission area includes one or more sub-areas connected via Bowden cables or similar means of transmission which may decrease the needed size of the first connecting frame. This reduces problems related to walking downstairs with the exoskeleton.

The actuator is situated at a central position of the user, placing them closer to the mass center of the person. The proposed actuation method also decreases the weight of the actuators by removing the need for geared transmission.

The mechanical transmission is part of this disclosed invention and is realized directly in the ankle exoskeleton. The tension element is rigidly connected to one of the second force transmission areas. From there it is routed via the first connecting frame using a pulley to the other force transmission areas. At this point it is further routed to the actuator via pulleys and Bowden cables or similar means of transmission. Tension elements are used to transmit the actuation forces in these Bowden cables. Among others, high-strength tension materials such as ropes, Dyneema, and/or steel cables can be utilized for this purpose.

The routing can be realized for example in a block and tackle arrangement with one or more tensioning sections to achieve a mechanical advantage increasing the realizable peak assistance torque and reducing the motor velocity. This reduces the weight of the actuation compared to common geared transmission. This way moderately high transmission ratios of about 1:10 is reachable without relying on mechanical gears.

The disclosed invention targets the reduction of device weight by minimizing twisting motions through evenly distributed actuation forces due to a symmetric design. This approach allows for the utilization of lighter design components, contributing to overall user comfort and usability.

In summary, the herein disclosed invention seeks to improve ankle exoskeleton technology by providing a solution that optimizes assistance torque, minimizes device complexity, and enhances adaptability, thereby addressing the shortcomings of existing devices and significantly improving user outcomes and quality of life.

Further details and features of the herein disclosed invention result from the following description of an embodiment, in particular in connection with the dependent claims. In this case, the respective features may be realized on their own or in a plurality in combination with one another. The herein disclosed invention is not limited to these embodiments.

The embodiments are schematically illustrated in the following figures. Here, the same reference numerals in the figures denote the same or functionally equivalent elements or elements corresponding to one another in terms of their functions.

Herein the following figures show in:
- Fig. 1: schematic representations of an embodiment according to claim 1;
- Fig. 2: detailed schematic representations of an embodiment according to claim 1;
- Fig. 3: detailed schematic representations of an embodiment according to claim 1;
- Fig. 4: schematic representation of different embodiments according to claim 2;
- Fig. 5: schematic representation of different embodiments according to claim 13;
- Fig. 6: schematic representation of different embodiments according to claim 9 and 13;

Herein same terms and same reference signs disclose same embodiments having same capabilities.

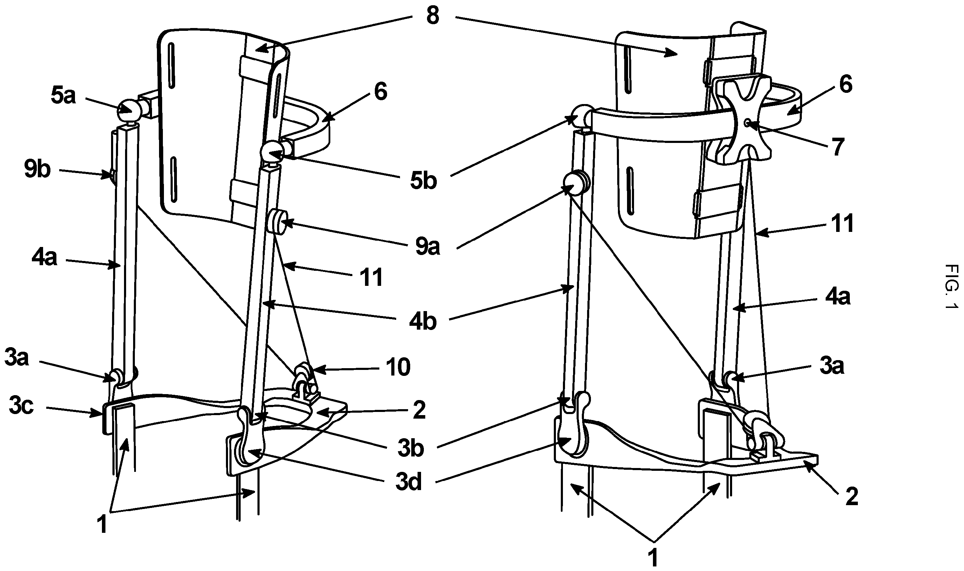

Fig. 1 shows one exemplary schematic representation of an embodiment according to claim 1 in two different 3D views (front-left and back-left) with a symmetric structure. A first mounting fixture 1 is indicated which is rigidly connected to a first connecting frame 2 via two bearing points on each side. An arcuate first connecting frame 2 is rigidly positioning and connecting the two bearing points relative to each other. On the first connecting frame 2 a first force transmission area 10 is positioned centrally behind the first mounting fixture 1 at the outermost point. Two first bearing arrangements 3c and 3d with one axis of rotation each are inserted at each of the bearing points on both sides, their axes of rotation aligned. Connected to these are two first bearing arrangements 3a and 3b with one axis of rotation each, their axes of rotation orthogonally oriented to the first bearing arrangements 3c and 3d, where the first bearing arrangement 3c is connected to the first bearing arrangement 3a and the first bearing arrangement 3b to the first bearing arrangement 3d. Two vertical beam-shaped strut arrangements 4a and 4b connect the first bearing arrangements 3a and 3b with the second bearing arrangements 5a and 5b with three axes of rotation each positioned above, where the first bearing arrangement 3a is connected to the second bearing arrangement 5a via the strut arrangement 4a and the first bearing arrangement 3b is connected to the second bearing arrangement 5b via the strut arrangement 4a. Two second force transmission areas 9a and 9b are positioned on the two strut arrangements 4a and 4b (force transmission area 9a on strut arrangement 4b and force transmission area 9b on strut arrangement 4a), wherein their position is close to the second bearing arrangements 5a and 5b. Both second bearing arrangements 5a and 5b are rigidly, horizontally connected via an arcuate second connecting frame 6. The third bearing arrangement 7 with one axis of rotation centrally connects the second connecting frame 6 with the second mounting fixture 8. The third bearing arrangement 7 is limited in its rotation by an outer frame. The second mounting fixture 8 is presented as a semicircular cylindrical shell centrally connected to the third bearing arrangement 7. The tension element 11 is routed once from the second force transmission area 9a via a pulley in the first transmission area 10 to the second force transmission area 9b.

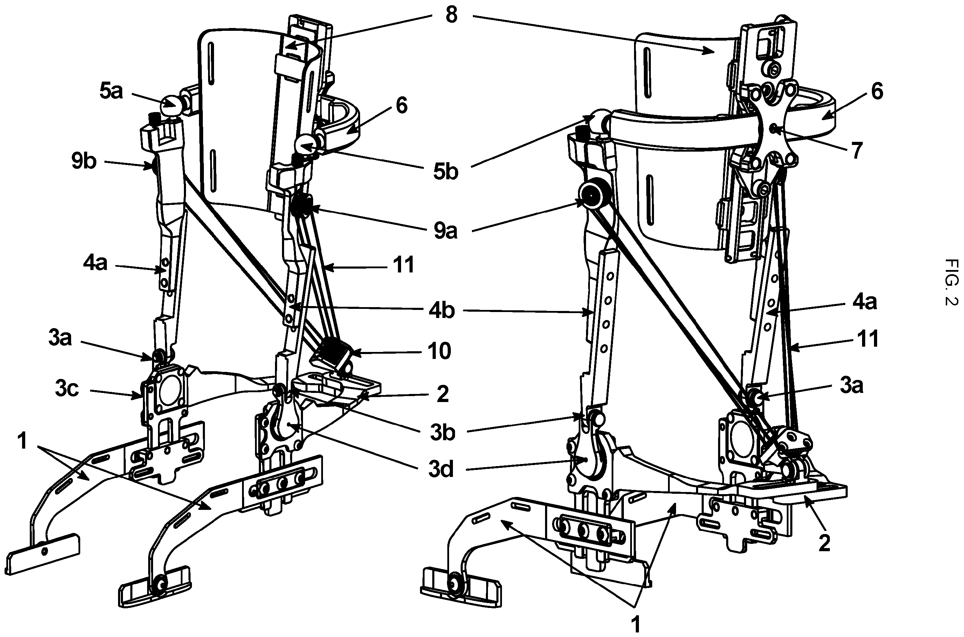

Fig. 2 shows one more detailed exemplary schematic representation of an embodiment according to claim 1 in two different 3D views (frontal-left and back-left) with a completely symmetric structure. The first mounting fixture 1 is presented in two symmetric parts to be attached to the ball of the foot. The first mounting fixture features horizontal slots for attachment of attachment straps. It includes an additional rotational DoF between the attachment to the ball of the foot and the connection to the first connecting frame 2. The connection between the first mounting fixture 1 and the first connecting frame 2 via one bearing point on each side is presented as a screw connection which is statically adjustable in vertical (height) and horizontal (length) direction. The first connecting frame 2 connects the two bearing points with each other. It has an arcuate shape consisting of two parts that are centrally connected via a screw connection and thus statically adjustable in horizontal direction (width) according to claim 14. The first bearing arrangement 3a, 3b, 3c and 3d is separated into two parts per side with one axis of rotation each, where the first bearing arrangements 3c and 3b are positioned at the two bearing points of the first connecting frame 2, their axes of rotation aligned. The first bearing arrangements 3a and 3b are connected to the first bearing arrangements 3c and 3d via a small frame part orienting their axes of rotation orthogonally to the first bearing arrangements 3c and 3d, where the first bearing arrangement 3c is connected to the first bearing arrangement 3a and the first bearing arrangement 3b to the first bearing arrangement 3d. Two vertical strut arrangements 4a and 4b are pivotably mounted via the first bearing arrangements 3a and 3b, where the strut arrangement 4a is connected to the first bearing arrangement 3a and the strut arrangement 4b to the first bearing arrangement 3b. The strut arrangements are statically adjustable in vertical direction (length) via a screw connection according to claim 16. At the top they integrate two second force transmission areas 9a and 9b, where the force transmission area 9a is positioned on the strut arrangement 4b and the force transmission area 9b on the strut arrangement 4a. At the top of the each of the strut arrangements 4a and 4b, two second bearing arrangement 5a and 5b with three axes of rotation each are connected, where the second bearing arrangement 5a is positioned on the strut arrangement 4a and the second bearing arrangement 5b on the strut arrangement 4b. Rigidly connecting those two second bearing arrangements 5a and 5b is a horizontally oriented second connecting frame 6. The second connecting frame 6 is centrally attached to a third bearing arrangement 7 with one axis of rotation which is limited in its rotation by an outer frame. The third bearing arrangement 7 is attached centrally to the second mounting fixture 8 with a statically adjustable connection in vertical direction (height) according to claim 17. The second mounting fixture 8 is presented as a semicircular cylindrical shell. It features vertical slots for attachment of attachment straps. The tension element 11 is routed in a block and tackle arrangement with three tensioning sections from the second force transmission area 9a via an arrangement of three pulleys in the first transmission area 10 to the second force transmission area 9b.

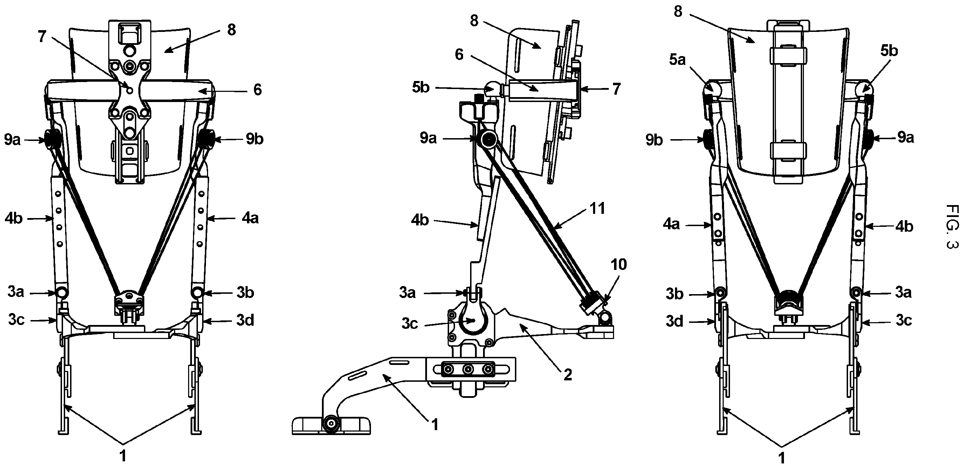

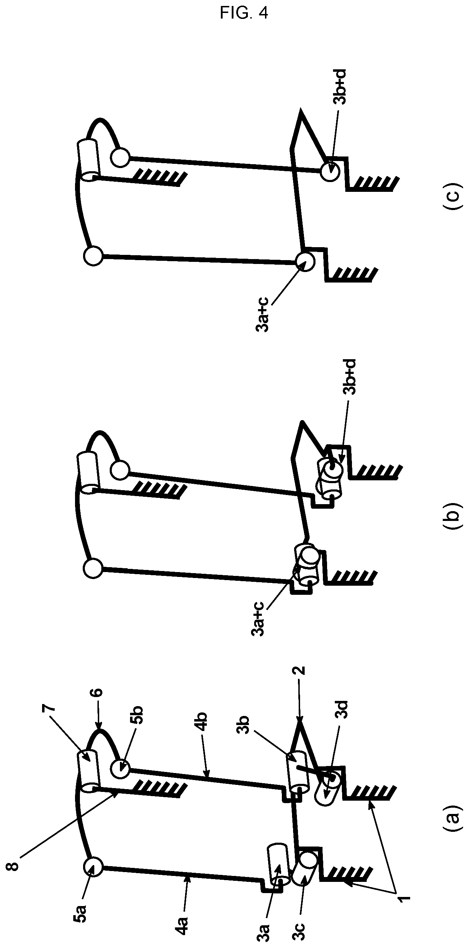

Fig. 3 shows further views of the detailed schematic representations of an embodiment according to claim 1 and Fig. 2. The detailed schematic 2D representations in back, side and front view complement the detailed schematic 3D representations presented in Fig. 2. Fig. 4 shows a schematic representation of different embodiments [Sub-Figs. 4(a), 4(b)], and 4(c)] according to claim 2. A first mounting fixture 1 is rigidly connected to a first connecting frame 2 via two bearing points on each side. An arcuate first connecting frame 2 is rigidly positioning and connecting the two bearing points relative to each other. In the Sub-Fig. 4(a), two first bearing arrangements 3c and 3d with one axis of rotation each are inserted at each of the bearing points on both sides, their axes of rotation aligned. The first bearing arrangements 3a and 3b are connected to the first bearing arrangements 3c and 3d via a small frame part orienting their axes of rotation orthogonally to the first bearing arrangements 3c and 3d, where the first bearing arrangement 3c is connected to the first bearing arrangement 3a and the first bearing arrangement 3b to the first bearing arrangement 3d. Two vertical strut arrangements 4a and 4b connect the first bearing arrangements 3a and 3b with the second bearing arrangement 5a and 5b with three axes of rotation each positioned above, where the first bearing arrangement 3a is connected to the second bearing arrangement 5a via the strut arrangement 4a and the first bearing arrangement 3b is connected to the second bearing arrangement 5b via the strut arrangement 4a. Two second force transmission areas 9a and 9b are positioned on the two strut arrangements 4a and 4b (force transmission area 9a on the strut arrangement 4b and force transmission area 9b on the strut arrangement 4a), wherein their position is close to the second bearing arrangement 5a and 5b. Both second bearing arrangements 5a and 5b are rigidly, horizontally connected via an arcuate second connecting frame 6. The third bearing arrangement 7 with one axis of rotation centrally connects the second connecting frame 6 with the second mounting fixture 8. The second mounting fixture 8 is centrally connected to the third bearing arrangement 7. In Sub-Fig. 4(b), the first bearing arrangements 3c and 3d are combined with the first bearing arrangement 3a and 3b, so that their axes are crossing and are aligned orthogonal, where the first bearing arrangement 3c is connected to the first bearing arrangement 3a, creating cross formed connection 3a+c, and the first bearing arrangement 3b to the first bearing arrangement 3d, creating a cross formed first bearing arrangement 3b+d. Where each of the cross formed first bearing arrangements 3a+c and 3b+d features two axes of rotation. In Sub-Fig. 4(c), the first bearing arrangements 3c and 3d, and 3a and 3b are extended each with another rotation axis collinear with the two strut arrangements 4a and 4b, where the first bearing arrangement 3c is connected to the first bearing arrangement 3a and the strut arrangement 4a, and where the first bearing arrangement 3d is connected to the first bearing arrangement 3b and the strut arrangement 4b. Thereby forming ball formed first bearing arrangements 3a+c and 3b+d, where each of the two ball formed connections features three axes of rotation.

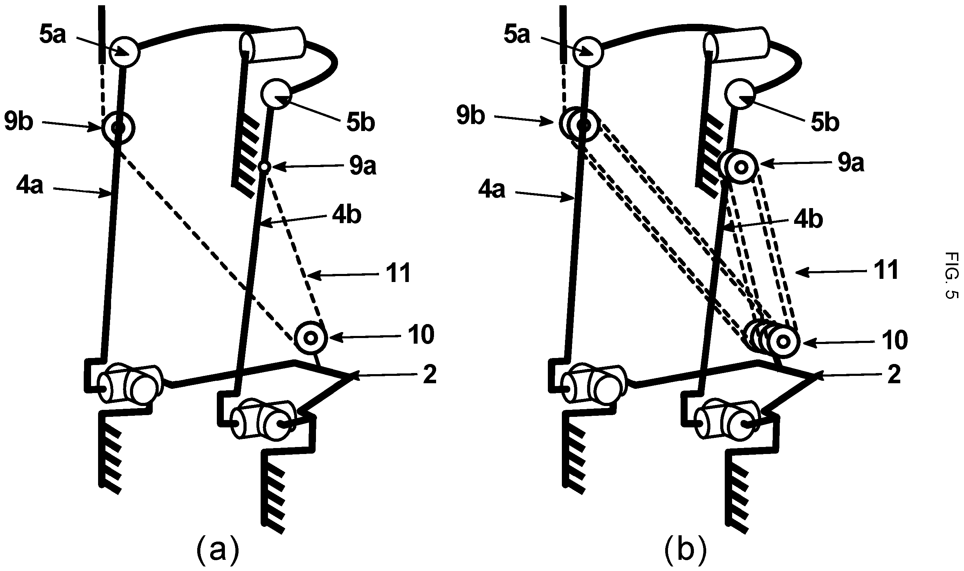

Fig. 5 shows one schematic representation of different embodiments [Sub-Figs. 5(a) and 5(b)] according to claim 13; In Sub-Fig. 5(a), the first force transmission area 10 is displayed as an arrangement of three pulleys and is integrated into the screw connection connecting the two parts of the first connecting frame 2. Two second force transmission areas 9a and 9b are positioned on the two strut arrangements 4a and 4b (force transmission area 9a on the strut arrangement 4b and force transmission area 9b on the strut arrangement 4a), wherein their position is close to the second bearing arrangement 5a and 5b. The tension element 11 is routed once in a block and tackle arrangement from the second force transmission area 9a via an arrangement of three pulleys in the first transmission area 10 to the second force transmission area 9b. In Sub-Fig. 5b, additional pulleys are added to the force transmission areas 9a, 9b and 10. Therein, forming more than one tensioning sections.

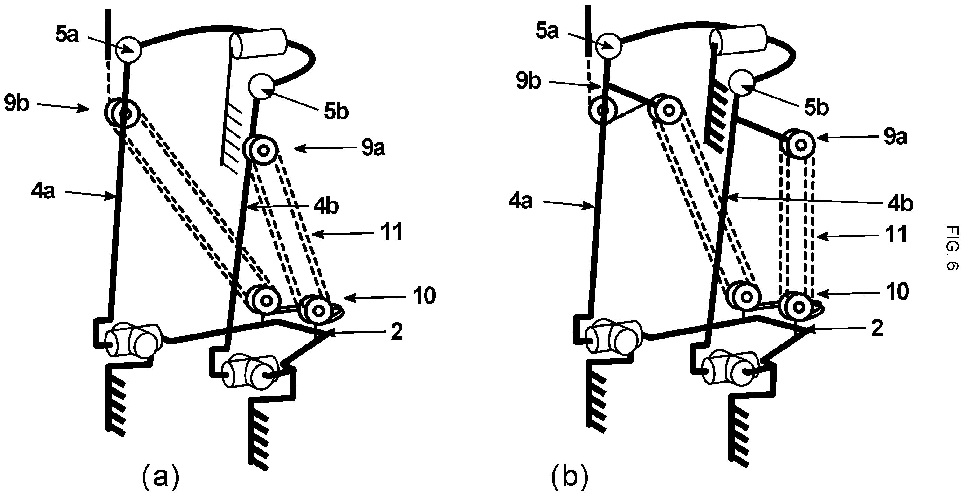

Fig. 6 shows one schematic representation of different embodiments [Sub-Figs. 5(a) and 6(b)] according to claim 9 and 13; In Sub-Fig. 6(a), the first force transmission area 10 is displayed as an arrangement of two sets of pulleys and is integrated into the first connecting frame 2 on two locations, thereby providing more than one first force transmission sub-areas. In Sub-Fig. 6(b), the embodiment is the same as in Sub-Fig. 6(a) with the difference that two second force transmission areas 9a and 9b are positioned on the two strut arrangements 4a and 4b (force transmission area 9a on the strut arrangement 4b and force transmission area 9b on the strut arrangement 4a), wherein the sets of pulleys are spatially distanced from the struts.

### List of reference signs:

- 1: first mounting fixture
- 2: first connecting frame
- 3: first bearing arrangement (3a, 3b, 3c, 3d)
- 4: strut arrangement (4a, 4b)
- 5: second bearing arrangement (5a, 5b)
- 6: second connecting frame
- 7: third bearing arrangement
- 8: second mounting fixture
- 9: second force transmission area (9a, 9b)
- 10: first force transmission area
- 11: tension element

### Bibliography:

[1] K. L. Poggensee and S. H. Collins, "How adaptation, training, and customization contribute to benefits from exoskeleton assistance," Science Robotics, vol. 6, no. 58, p. eabf1078, Sep. 2021.
[2] J. Zhang, P. Fiers, K. A. Witte, R. W. Jackson, K. L. Poggensee, C. G. Atkeson, and S. H. Collins, "Human-in-the-loop optimization of exoskeleton assistance during walking," Science, vol. 356, no. 6344, pp. 1280-1284, Jun. 2017.
[3] L. M. Mooney and H. M. Herr, "Biomechanical walking mechanisms underlying the metabolic reduction caused by an autonomous exoskeleton," Journal of NeuroEn-gineering and Rehabilitation, vol. 13, no. 1, p. 4, Dec. 2016.

## Claims

1. Ankle exoskeleton, comprising:
a. a first frame assembly having a first mounting fixture (1) set up in such a way to fix a foot thereto, having two bearing points arranged on each side of the first mounting fixture (1), and a first connecting frame (2)
i. positioning rigidly the two bearing points relative to each other,
ii. is rigidly connected to the first mounting fixture (1), and
iii. having at least a first force transmission area (10) centrally in front and/or behind the first mounting fixture (1);
b. a first bearing arrangement (3a, 3b, 3c, 3d) is inserted at each of the bearing points;
c. two strut arrangements (4a, 4b), each of which is pivotably mounted with one of the ends of the first bearing arrangements (3a, 3b, 3c, 3d) at least over two axes and each of which has a second bearing arrangement (5a, 5b) at the other end and at least a second force transmission area (9a, 9b) at the respective strut arrangement (4a, 4b);
d. a second connecting frame (6) positioning the two second bearing arrangements (5a, 5b) rigidly relative to one another and is pivotably mounted relative to the strut arrangements (4a, 4b);
e. a second frame assembly with a second mounting fixture (8) set up such a way to fix a lower leg to the foot, wherein the second connecting frame (6) is vertically pivotably fixed centrally between the two second bearing arrangements (5a, 5b) via either a system flexibility axially to both strut arrangements (4a, 4b) or a third bearing arrangement (7) with the second connecting frame (6);
f. wherein both second force transmission areas (9a, 9b) are each connected to the first force transmission area (10) via at least one tension element (11); and
g. an actuator system configured in such a way that the length of the tension elements (11) is adjustable statically and/or dynamically.

2. Ankle exoskeleton according to claim 1, wherein the first bearing arrangement (3a, 3b, 3c, 3d) and/or the second bearing arrangement (5) is/are set up in such a way to provide at least two axes of rotation.

3. Ankle exoskeleton according to one of the preceding claims, wherein the first bearing arrangement (3a, 3b, 3c, 3d) and/or the second bearing arrangement (5a, 5b) comprise/s a single bearing, a bearing combination, a single elastic element or a combination of elastic elements.

4. Ankle exoskeleton according to one of the preceding claims, wherein the first bearing arrangement (3a, 3b, 3c, 3d), the second bearing arrangement (5a, 5b), and/or the third bearing arrangement (7) comprise/s at least a rotary encoder to measure rotation.

5. Ankle exoskeleton according to one of the preceding claims, wherein the second mounting fixture (8) is elastic and the bearing arrangement (7) is integrated into the second mounting fixture (8).

6. Ankle exoskeleton according to one of the preceding claims, wherein the third bearing arrangement (7) is set up in such a way to provide at least one axis of rotation.

7. Ankle exoskeleton according to one of the preceding claims, wherein the third bearing arrangement (7) comprises a single bearing or elastic element.

8. Ankle exoskeleton according to one of the preceding claims, wherein the first force transmission area (10) and/or at least one of the second force transmission areas comprise/s one or more pulleys.

9. Ankle exoskeleton according to one of the preceding claims, wherein the first force transmission area (10) provides more than one first force transmission sub-areas.

10. Ankle exoskeleton according to one of the preceding claims, wherein one of the second force transmission areas (9a, 9b) comprises a fixture to at least one tension element (11).

11. Ankle exoskeleton according to one of the preceding claims, wherein the second force transmission areas (9a, 9b) are configured in such a way that they are adjustable in height along the strut arrangement (4).

12. Ankle exoskeleton according to one of the preceding claims, wherein the tension element (11) is formed by a cable, a Bowden cable or a rope that is formed by at least one material of a group of materials, wherein this group comprises: metals or metal alloys, synthetic materials, or natural rope materials.

13. Ankle exoskeleton according to one of the preceding claims, wherein the actuator system comprises an actuator connected to at least one tension element (11) providing torque around one axis of the first bearing arrangement (3a, 3b, 3c, 3d) for plantar- and/or dorsiflexion and the at least one tension element (11) is formed by a block and tackle arrangement with one or more tensioning sections.

14. Ankle exoskeleton according to one of the preceding claims, wherein the first connecting frame (2) and/or the second connecting frame (6) is/are set up in such a way that it is/they are adjustable in width and length along the longitudinal and transversal axes of a lower leg.

15. Ankle exoskeleton according to one of the preceding claims, wherein the first connecting frame (2) provides strain gauge sensors to measure load.

16. Ankle exoskeleton according to one of the preceding claims, wherein the strut arrangements (4a, 4b) are set up in such a way that they are adjustable in length along their longitudinal axis.

17. Ankle exoskeleton according to one of the preceding claims, wherein the second mounting fixture (8) is set up in such a way that it is adjustable in width and height along the longitudinal and transversal axes of a lower leg and relative to the third bearing arrangement (7).
